**Europäisches Patentamt**

(19) **European Patent Office**

**Office européen des brevets**

(11) Numéro de publication: **0 018 460**
**A1**

(12) # DEMANDE DE BREVET EUROPEEN

(21) Numéro de dépôt: **79400831.8**

(22) Date de dépôt: **08.11.79**

(51) Int. Cl.³: **B 60 R 3/00**
**B 60 P 3/22, B 62 D 25/22**
**E 04 G 1/26**

(30) Priorité: **20.04.79 FR 7910049**

(43) Date de publication de la demande:
**12.11.80 Bulletin 80/23**

(84) Etats Contractants Désignés:
**AT BE CH DE FR GB IT LU NL SE**

(71) Demandeur: **Anglade, René**
**48, Rue Anatole France**
**F-060110 Meru(FR)**

(72) Inventeur: **Anglade, René**
**48, Rue Anatole France**
**F-060110 Meru(FR)**

(54) **Echelle dissuasive associée à un garde-corps de sécurité repliable pour véhicules de transport.**

(57) GARDE-CORPS de sécurité et échelle d'accès à échelons escamotables pour dissuasion d'usage sans accord préalable.

Le principe, mis au point à l'origine pour véhicules citernes transporteurs d'hydrocarbures, mais extrapolable en tous domaines ou, pour raisons de sécurité, une dissuasion d'accès est souhaitable si un garde-corps de protection contre les risques de chute n'a pas été préalablement mis en place, se réfère de l'invention ci-après :

Le garde-corps de sécurité est un parallèlogramme repliable en régime de circulation, de manière à maintenir l'encombrement du matériel dans un gabarit convenu ou règlementaire.

Une échelle d'accès dont plusieurs échelons localisés dans une zóne où ne se présentent pas d'aspérités pouvant constituer des marchepieds de remplacement, sont escamotables, et asservie au garde-corps.

En cas de nécessité d'accès, il convient de manoeuvrer une pompe hydraulique, électro-hydraulique, pneumatique ou autre, laquelle alimente un vérin qui actionne l'ensemble rambarde de sécurité et par asservissement, place les échelons de l'échelle d'accès en position utilisable.

Les éléments caractéristiques de l'innovation sont :
- Echelons de l'échelle d'accès escamotables en une région où leur absence constitue un obstacle très important à toute accessibilité (DISSUASION).
- Interconnexion particulière entre échelle d'accès et rambarde de SECURITE, de sorte que l'usage de la première oblige la mise en position de service de la seconde.
- Commande au sol, de sorte qu'il soit quasi impossible d'amorcer toute escalade avant que l'ensemble de sécurité ne soit en place,
- Transmission hydraulique ou pneumatique qui garantit la fermeté de position des divers éléments et les risques d'usure ou bruits parasites en régime de circulation.

./...

Croydon Printing Company Ltd.

Avant

Fig 3

Fig 4

La présente invention complète le brevet d'invention N° 76.17177 relatif à un garde-corps de sécurité repliable pour véhicule de transport par route, fer ou mer, et plus particulièrement pour un camion ou une remorque équipé d'une citerne destinée au transport de matières liquides.

Ce même dispositif peut également équiper des véhicules de configuration similaire pour transport de produits pulvérulents ou chimiques par exemple, ainsi que tous autres véhicules qui requierent une nécessité d'accès, voire de mouvements en partie élevée présentant un risque d'accident par chute.

Il peut en outre être extrapolé en entreprises, sur ponts roulants, portiques et tous engins pour lesquels un garde-corps fixe peut représenter une gêne en position active, pour des raisons d'enconbrement.

Il peut être également appliqué dans la corporation du bâtiment, sur échafaudages mobiles ou démontables, par exemple pour en réduire l'encombrement lors du transport sur chantiers tout en évitant des pertes de temps en montage sur place, et en imposant malgré tout la présence d'un garde-corps indispensable lors de l'utilisation.

Le principe du brevet précité demeure, à savoir qu'en cas de non nécessité d'accès en hauteur, plusieurs échelons de l'échelle de montée sont repliés le long des montants, donc dans le plan de l'échelle, et le garde-corps articulé se trouve également en position repliée, sans gêne d'encombrement soit pour la circulation s'il s'agit d'un engin mobile, soit pour le transport s'il s'agit d'un matériel transporté.

La nouveauté de la présente invention est fondamentale, à savoir que dans le brevet précédent et les illustrations s'y rapportant, les échelons articulés étaient localisés en partie basse de l'échelle d'accès, c'est-à-dire dans une zône où subsistent fréquemment des marchepieds de remplacement, tels que pare-chocs, protecteurs feux arrières, ou toutes autres aspérités utilisables sans grand effort physique de la part d'un usager précipité ou négligent.

Dans l'invention, lesdits échelons sont disposés en partie supérieure, soit dans une zône où les acrobaties deviennent infiniment plus dangereuses, compte tenu d'une part, de la hauteur, et d'autre part, de la raréfaction des appuis de

rechange éventuels. Ceci accentue la dissuasion, et par suite renforce la sécurité.

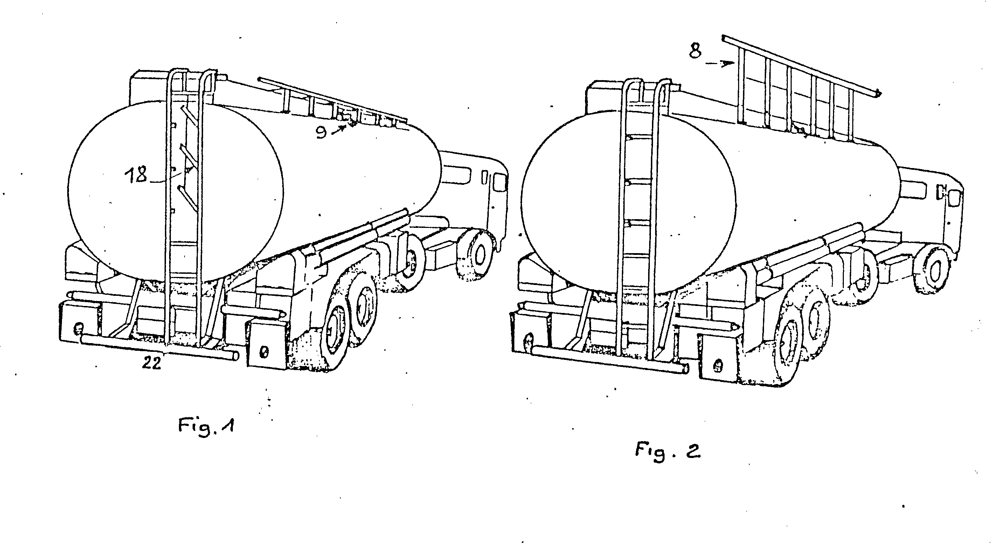

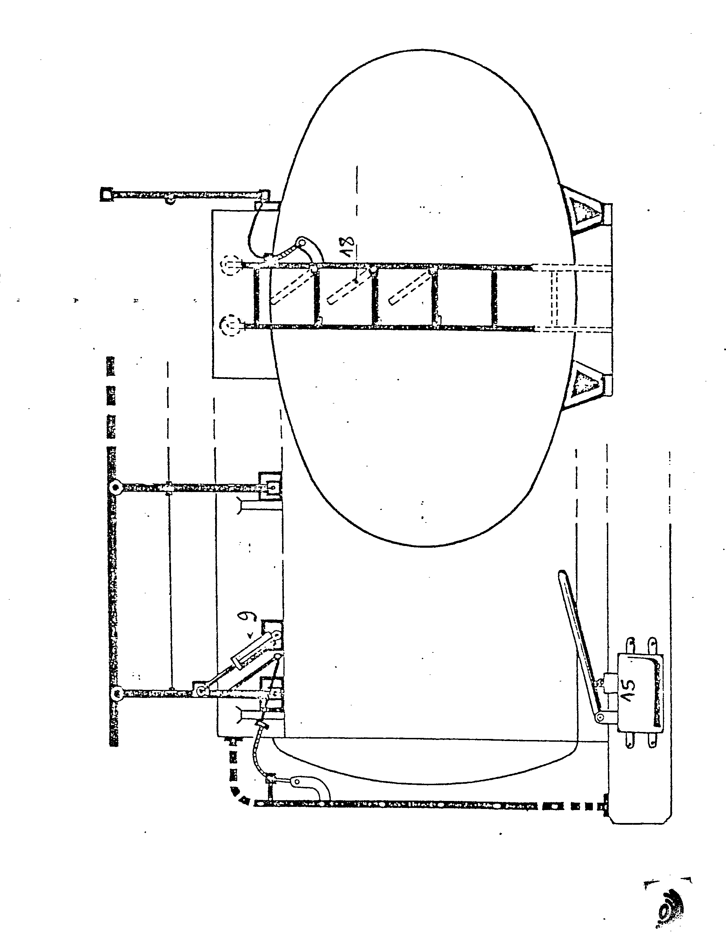

Les illustrations en annexe : figures 1 et 2, représentent le véhicule en circulation (rampe de sécurité abaissée et, échelons de l'échelle relevés), et en livraison (rampe de sécurité relevée, échelons de l'échelle abaissés), et le schéma de montage figures 5 et 6, permettent la compréhension de ce qui précède, étant entendu que, à l'exception de la position des échelons articulés de l'échelle d'accès, le descriptif annexé au brevet initial appartenant au même demandeur, demeure valable.

Diverses applications relevant du même principe peuvent faire l'objet de variantes, selon la configuration du matériel et la position possible de l'échelle d'accès.

Ainsi, une échelle d'accès comportant EN PARTIE HAUTE, un tronçon escamotable rassemblant plusieurs échelons et asservis à la rambarde de sécurité, exploite dans son principe, l'objet de la présente invention, quels que soient les accessoires mécaniques, pneumatiques, hydrauliques, les télécommandes ou autres procédés utilisés.

Dans le descriptif et ses annexes, il n'est fait mention que d'une seule rambarde de sécurité. Il est évident que celle-ci peut être doublée, s'agissant alors de prévoir un second vérin actionné par la même pompe de commande, relevant simultanément la seconde rambarde.

Enfin il est possible de définir une commande à distance, électrique ou autre, à partir de la cabine de pilotage du véhicule, ou tout autre poste de responsabilité. Ainsi en entreprise industrielle, en bâtiment, sur navires, il devient possible d'interdire tout accès en position haute et dangereuse sans référence préalable au responsable préposé aux commandes de l'échelle de sécurité, et par suite, des garde-corps.

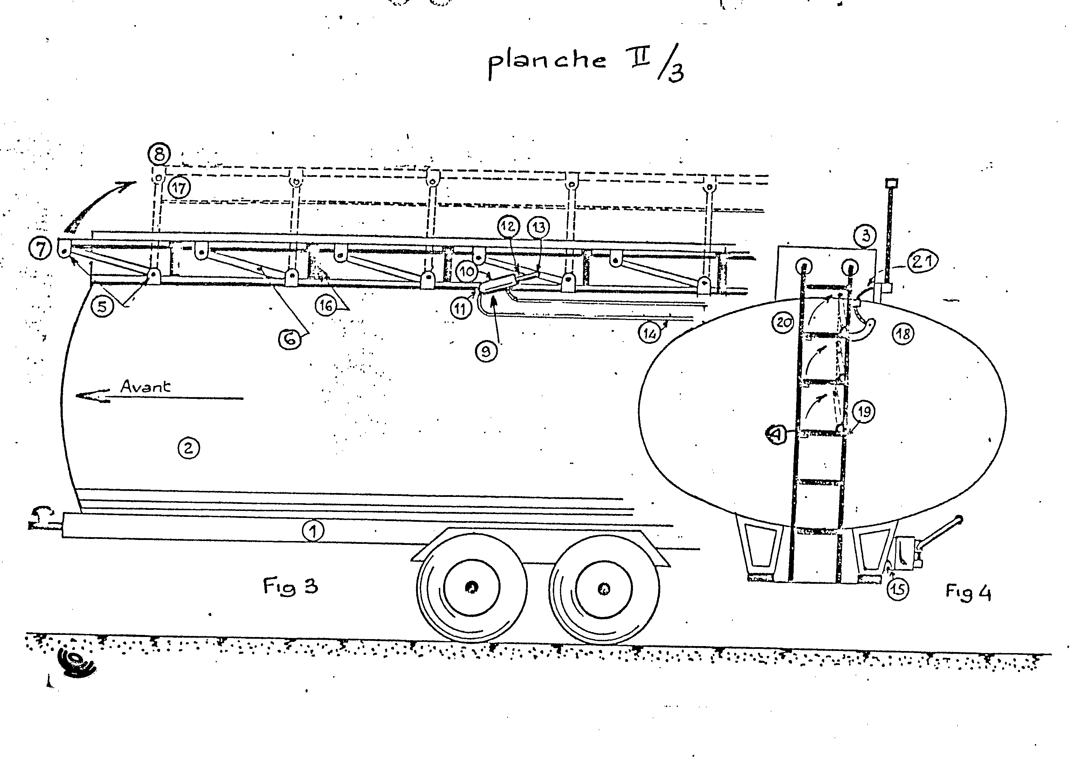

La description qui suit et le dessin schématique figures 3 et 4 non limitatif qui s'y rattache, présente à titre d'exemple, une forme de ce garde-corps repliable pour application sur semi-remorque équipée d'une citerne.

Le chassis 1 supporte une citerne 2, surplombée d'une passerelle de circulation 3, dans l'axe ou en toute autre partie supérieure de ladite citerne 2. Une échelle 4 située à l'arrière de la citerne, ou en tout autre endroit, permet l'accès à la passerelle, ou à une plateforme de travail. Sur l'un au moins des côtés de cette passerelle 3, sont prévus selon l'invention, des barreaux supports 6 parallèles et de même longueur, reliés par axes d'articulation 5 et 7 à une main courante ou lisse ou rambarde 8 qui demeure toujours parallèle à la passerelle, tant en position relevée que repliée sur les berceaux 16.

L'un des barreaux supports 6 est actionné par un vérin hydraulique 9 à double effet, dont le corps 10 est articulé en 11 sur la passerelle 3 et dont la tige 12 est articulée en 13 sur le barreau support 6 correspondant. Le vérin 9 est commandé par une pompe 15 et canalisation 14, soit manuellement avec levier, soit mue électriquement par télécommande, et située en un endroit d'accès commode, par exemple : en bas de l'échelle 4.

Cette commande manuelle ou automatique permet de relever ou rétracter le vérin 9, de manière à réaliser le relevage ou l'abaissement du garde-corps selon le principe du parallèlogramme déformable que constitue l'ensemble.

Lorsque le vérin 9 est développé, tous les barreaux supports ou pieds 6 sont en position verticale, et la main courante 8 est en position haute à un mètre environ de la passerelle 3, c'est-à-dire à une hauteur compatible avec les normes de sécurité en ce domaine. La protection est en outre renforcée par une sous-lisse 17, en câble métallique, chaine ou tout autre matériau, située à une hauteur intermédiaire, et reliant entre eux les différents barreaux supports 6.

L'ensemble garde-corps se relève d'avant vers l'arrière de manière à ce que, en position haute, le premier barreau support se trouve en position verticale sitôt issue de l'échelle d'accès. La main courante est immédiatement en place dès l'accès à la passerelle, sans "trou" dangereux. Le garde-corps décrit est complété par un système qui interdit l'utilisation de l'échelle 4 lorsque la main courante 8 est en position repliée.

Pour ce faire, l'échelle 4 comporte EN POSITION HAUTE, plusieurs barreaux successifs, articulés dans le plan de l'échelle. Ces barreaux sont reliés entre eux par une trin- glerie, câble ou chaine qui les solidarise. De la sorte, lorsqu'il n'est pas nécessaire d'accéder en partie supérieure de l'engin, la rambarde de sécurité est en position repliée, donc non dangereuse pour la circulation, ou non encombrante pour le transport. Simultanément, les échelons SUPERIEURS de l'échelle d'accès sont relevés le long des montants ou à l'intérieur s'il s'agit d'un tronçon articulé, et la montée est impossible sauf acrobaties physiquement difficiles. Pour accéder à la passerelle de circulation, ou aux dômes de chargement, il devient donc nécessaire de rendre les échelons utilisables, donc de les abaisser, ce qui simultanément, commande la relevée du garde-corps de sécurité.

En outre sur le dessin sont figurés en 16 les berceaux, en 18, 19 et 20, les échelons articulés asservis à la rambarde (profilé ou tube tous alliages), et en 21, l'asservissement rampe/échelle (tous procédés de transmission), et en 22 fixation rigide.

Bien entendu, l'invention ne se limite pas à la seule forme de réalisation ici décrite à titre d'exemple, pour une application particulière. Elle peut au contraire faire l'objet d'une multitude de variantes, exploitant des moyens semblables, quels que soient notamment les types de véhicules ou matériels auxquels elle s'applique, ou la localisation de l'installation. Ainsi, l'on peut installer le même garde-corps directement sur le dôme d'une citerne et non obligatoirement sur la passerelle, ou sur la galerie de toit de véhicule de transport non nécessairement équipé d'une citerne, sur matériel ferroviaire, maritime, sur ponts roulants, portiques ou autres, sans sortir du cadre de la présente invention.

*

*   *

## REVENDICATIONS

I- GARDE-CORPS repliable pour véhicules de transport ou tous matériels mobiles ou fixes notamment pour un camion ou une remorque équipé d'une citerne du type comprenant une main courante liée par des articulations à un ensemble de barreaux supports parallèles, eux-mêmes articulés à une partie solidaire de l'engin, de sorte que la main courante puisse être abaissée en direction de cette partie tout en restant parallèle à elle-même, par pivotement et inclinaison des barreaux supports, des moyens étant prévus pour commander ce mouvement de pivotement. Le parallèlogramme articulé ainsi constitué est asservi à une échelle d'accès par l'intermédiaire d'une transmission par câble métallique, chaîne ou autre procédé mécanique, hydraulique ou pneumatique. Le couple échelle/ garde-corps est caractérisé par le fait que l'échelle comporte en partie pauvre en marchepieds de remplacement, des échelons escamotés lorsque le garde-corps est en position repliée donc, n'assure pas la protection à laquelle il est destiné. De la sorte, l'accès en hauteur devient impossible, sauf effort physique et acrobatique important et inutile. La DISSUASION et la SECURITE qui en résultent sont ainsi assurées au mieux.

II- GARDE-CORPS selon la revendication "I" caractérisé en ce que l'échelle comporte plusieurs barreaux mobiles dont une extrémité est articulée à un montant de l'échelle ou un élément solidaire, de manière qu'ils puissent pivoter dans le plan de l'échelle et/ou s'y intégrer; ces barreaux étant reliés par une transmission par câble métallique, chaîne ou autre.

III- GARDE-CORPS selon la revendication "I" caractérisé en ce que l'échelle comporte en zône pauvre - voire exempte - de marchepieds de remplacement, des échelons escamotables par articulation d'un tronçon de ladite échelle.

IV- GARDE-CORPS selon la revendication "I" caractérisé en ce que l'échelle d'accès comporte en zône pauvre - voire exempte - de marchepieds de remplacement, des échelons escamotables par le coulissement d'un tronçon de ladite échelle.

0018460

V- GARDE-CORPS selon la revendication "I" caractérisé en
ce que l'échelle d'accès comporte en zône pauvre - voire
exempte - de marchepieds de remplacement, des échelons escamotables par démontage d'un tronçon de ladite échelle.

\*

\*\* \*\*

Fig. 1

Fig. 2

Avant

Fig 3

Fig 4

planche III/3

| | DOCUMENTS CONSIDERES COMME PERTINENTS | | CLASSEMENT DE LA DEMANDE (Int. Cl. ³) |
|---|---|---|---|
| Catégorie | Citation du document avec indication en cas de besoin, des parties pertinentes | Revendication concernée | |
| | GB - A - 926 289 (TORRIDON STEEL LTD.) <br> * en entier * <br><br> -- | 1 | B 60 R  3/00 <br> 3/22 <br> B 62 D 25/22 <br> E 04 G  1/26 |
| A | FR - A - 2 063 453 (CONSTRUCTIONS SOUDEES DU COTEAU) | 1 | |
| A | FR - A - 2 142 787 (GODARD et al.) | 1 | |
| A | BE - A - 851 135 (SOMEFRAM) | 1 | |
| A | US - A - 3 807 120 (VIANDON) | 1 | DOMAINES TECHNIQUES RECHERCHES (Int. Cl. ³) |
| | ---- | | B 60 R  3/00 <br> 3/22 <br> B 62 D 25/22 <br> E 04 G  1/26 |

**CATEGORIE DES DOCUMENTS CITES**

X: particulièrement pertinent
A: arrière-plan technologique
O: divulgation non-ecrite
P: document intercalaire
T: théorie ou principe à la base de l'invention
E: demande faisant interference
D: document cité dans la demande
L: document cite pour d'autres raisons

&: membre de la même famille, document correspondant

Le present rapport de recherche a ete etabli pour toutes les revendications

| Lieu de la recherche | Date d'achevement de la recherche | Examinateur |
|---|---|---|
| La Haye | 26-06-1980 | SCHMAL |

OEB Form 1503.1  06.78